# EUROPEAN PATENT SPECIFICATION

(11) **EP 2 610 165 B1**
(45) Date of publication and mention of the grant of the patent: **08.02.2017**
(21) Application number: 11400063.1
(22) Date of filing: 28.12.2011
(51) Int. Cl.: B64C 1/06, B32B 5/12

(54) **Composite gusset filler and method of manufacture of said composite gusset filler**
Verbundstoffzwickelfüller und Verfahren zur Herstellung des besagten Verbundstoffzwickelfüllers
Agent de remplissage de gousset composite et procédé de fabrication de cet agent de remplissage de gousset composite

(43) Date of publication of application: 03.07.2013
(73) Proprietor: AIRBUS HELICOPTERS DEUTSCHLAND GmbH, 86609 Donauwörth (DE)
(72) Inventor: Wolf, Christian, 89231 Neu-Ulm (DE); Niemann, Hanno, 86152 Augsburg (DE); Beier, Uwe, 85635 Höhenkirchen-Siegertsbrunn (DE); Hänsch, Peter, 86391 Stadtbergen (DE)
(74) Representative: Pouillot, Laurent Pierre Paul

(56) References cited:
- EP-A2- 0 320 155
- WO-A1-2010/144007
- WO-A2-01/62495
- US-A- 5 045 388
- US-A- 5 650 229
- US-B1- 6 477 740

## Description

The present invention relates to a skin-stiffener transition assembly having a composite gusset filler and to a method of manufacture of said skin-stiffener transition assembly. The present invention relates as well to applications of said skin-stiffener transition assembly to an aircraft structure.

Fiber composite spars or skin-stiffener transitions are made by binding two "C" channels together to form a web with flanges. The channels may comprise a plurality of plies of fiber fabrics either in dry state or pre-impregnated with resin. When the channels are joined at the webs, an interstice or so-called interstice occurs along the flange because of these radii. Typically, a gusset filler fills the interstice.

Existing designs for gusset fillers are structurally inadequate and are challenging and expensive to produce or leave the structural integrity of the resulting composite in question.

The document US2006214058 discloses a number of integrated floor structures made of lightweight composite materials for use in an aircraft. Each of such floors includes a top-layer skin, a bottom-layer skin disposed below the top-layer skin and a first structural core disposed between the top-layer skin and the bottom-layer skin, the first structural core being composed of a honeycomb composite material. One or more denser structural cores can also be incorporated at strategic locations.

The document US2003044570 discloses a laminated composite (multi-ply) gusset filler with a plurality of woven fabric reinforced plies, cut to fill a radius gap, to increase absolute strength, to increase specific strength, or to reduce cost by reducing cracking and distortion in the radius of a composite assembly.

The document US5650229 describes a composite gusset filler for a skin-stiffener transition assembly. The composite gusset filler is formed from a plurality of unidirectional fibers. The plurality of unidirectional fibers is put in a mold to be shaped. The ends of the fiber bundle emerging out of the mold are cut. Then the fiber bundle inside the mold is received in an oven, where the fiber bundle is treated inside the mold.

The document US5045388 describes a process to obtain a composite from a thermoplastic resin matrix reinforced with stretch broken fibers. The thermoplastic resin matrix is reinforced with continuous filament fibers and then is heated. The fibers lengths included inside the resin are about 12 mm to about 152 mm. The fibers are drowned inside a resin to form the resin matrix reinforced composite.

It is an objective of the invention to provide a composite gusset filler that better meets the challenges faced with design of composite assemblies, i.e. a skin-stiffener transition assembly, under structural loading. It is a further objective of the invention to provide a method of manufacture of said skin-stiffener transition assembly and applications for said skin-stiffener transition assembly.

The solution is provided with a skin-stiffener transition assembly according to claim 1 and a method of manufacture according to claim 3.

A further solution is provided with applications according to claim 4.

The composite gusset filler in the skin-stiffener transition assembly is made of cut-off or scrap material from at least one textile carbon fiber reinforced plastic (CFRP) ply. The cut-off material is trimmed into fragments of 5 mm - 50 mm length and sorted into single yarn or roving elements to quasi-homogeneous raw material. Since cut-off material is used for the inventive composite gusset filler the raw material costs only reflect the process costs, such as trimming, etc. Thus according to a first advantage of the invention the final semi-finished part will be very cost effective after processing of the raw material into the desired geometry. The inventive composite gusset filler allows on top automated production processes providing net shapes and non-limited shapes of gusset fillers by using precise manufacturing routines. The semi-finished skin-stiffener transition with the inventive composite gusset filler will support a quick assembly during preform assembly and so it contributes again to cost savings in the CFRP production process. According to a further advantage of the invention incompatibilities between the gusset filler material and the ply material of the skin-stiffener transition can be excluded as the filler material (generally) is the same as the ply material. According to a still further advantage of the invention not only endless extrusions of the inventive composite gusset filler can be manufactured, said endless extrusions being anyway allowed.

The inventive composite gusset filler will support any advantageous gusset section geometry, e.g. optimized section shapes. As a consequence of the advantages provided by the invention results an increase in strength and structural integrity allowing exploitation in a reduction of structural mass, i.e. frozen margin of safety. Structural integrity of the CFRP parts may also be increased by homogeneous or specially tailored fiber orientations.

The inventive composite gusset filler material itself is manufacturing friendly and easy to handle. Since scrap material can be used for the inventive composite gusset filler material disposal costs could be saved as well.

According to invention the raw material for the inventive composite gusset filler is stored with a random fiber orientation.

The fiber orientation may have a main orientation direction adapted to the main load direction in the gusset area of the inventive composite gusset filler.

According to a further preferred embodiment of the invention the fiber volume content of the inventive composite gusset filler is 45 % to 65 %.

An endless extrusion profile of dry fibers is provided for sufficient dimensional stability during preform manufacturing, injection and curing of the composite. In addition to that the extrusion profile is easy to bend and/or to adapt to curvatures as well as easy to integrate into any dry fiber preform assembly.

The inventive composite gusset filler is isotropic and comprises at least a net shaped section for geometries of the inventive composite gusset filler which are capable to change the load distribution in a skin-stiffener transition.

The net shaped section is designed for optimized stress distribution and subsequent increased load transfer capabilities through the skin-stiffener transition using catenoïd-shaped section geometries or geometries developed from analytical or numerical optimization routines.

According to a preferred embodiment of the invention a method of manufacture of said composite gusset filler for a semi-finished skin-stiffener transition comprises the steps of cutting material from textile CFRP ply, trimming the cut material from textile CFRP plies into fragments of 5 mm - 50 mm length, sorting the cut textile CFRP plies into single yarn or roving elements to quasi-homogeneous raw material, and processing the quasi-homogeneous raw material to a desired geometry.

The processing is press-forming or customized extrusion allowing compression of the raw material continuously from each direction using a special extrusion tool, such as a propagation cone, or to simulate this situation with a press forming tool. The continuous production process leads to a cost efficient, isotropic and net shape composite gusset filler. The continuous compression from each direction leads to a random fiber orientation in the core of the gusset filler including fibers oriented perpendicular to the ply surface and thus in the critical direction of gusset filler loading.

The dry fibers fabrics in use are equipped with a thermoplastic binder material. Heat is applied to activate the binder on the cut-off fibers in the gusset filler to assure the gusset fillers specified shape.

According to a preferred embodiment of the invention said composite gusset filler is applied to semi-finished skin-stiffener transitions for helicopter airframes, helicopter structural parts, airplane doors, airplane frame manufacturing and/or non-aerospace applications.

A preferred embodiment of the invention is described in the following description with reference to the attached drawings.
FIG. 1 is a sectional view of a skin-stiffener transition assembly as per the invention.
FIG. 2 is a sectional view of a skin-stiffener transition assembly as per the invention.

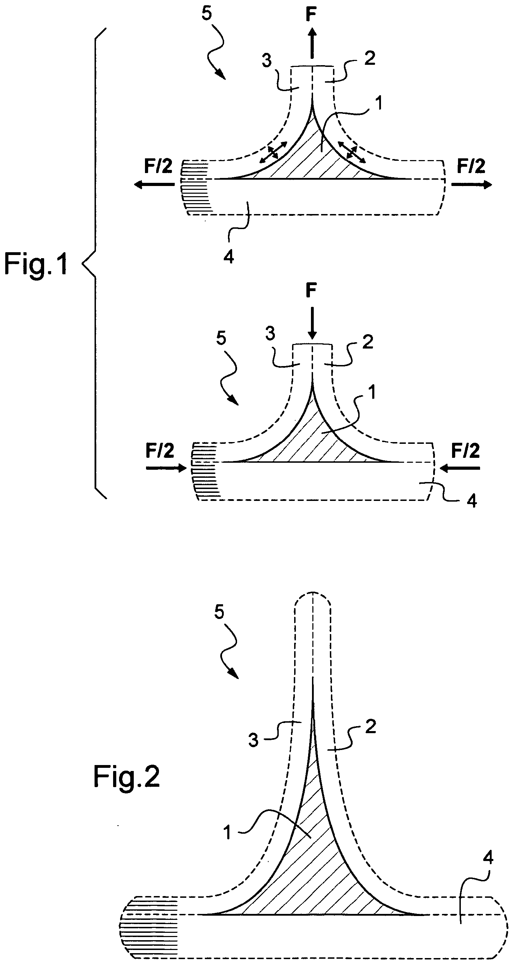

As shown in FIG. 1, 2 a composite gusset filler 1 for a semi-finished skin-stiffener transition 5 is encompassed by two shaped preforms made from fiber-reinforced fabric plies 2, 3 of a semi-finished part for a skin-stiffener transition 5 of an aircraft structure (not shown). The two shaped preforms 2, 3 adhere to a skin 4 of the skin-stiffener transition 5.

Each of the two shaped preformed fiber-reinforced fabric plies 2, 3 are conceived as a laminate ply stacking.

If a tensile load F is applied to the two shaped preformed fiber-reinforced fabric plies 2, 3 supplemental to in plane stresses result out-of plane stresses in the respective two shaped textile CFRP plies 2, 3. Said out-of plane stresses may lead to failure, such as de-bonding or delamination of the skin-stiffener transition 5. Radii at the respective laminate ply stackings may collapse if a compressive load F is applied to the two shaped preformed fiber-reinforced fabric plies 2, 3 and if said compressive load F is not dissipated into any other region of the skin-stiffener transition 5. The composite gusset filler 1 acts against de-bonding or delamination of the skin-stiffener transition 5, by either preventing or allowing a certain amount of deformation of the filler area.

The composite gusset filler 1 is applied for semi-finished skin-stiffener transitions 5 of helicopter airframes, helicopter structural parts, airplane doors, airplane structures e.g. for fuselage & cabin and/or non-aerospace applications.

### Reference List

- 1: composite gusset filler
- 2: Shaped textile CFRP ply
- 3: Shaped textile CFRP ply
- 4: skin
- 5: skin-stiffener transition

## Claims

1. A skin-stiffener transition assembly (5) for an aircraft structure; the skin-stiffener transition assembly (5) including two C channels bind together to form a web with flanges, the C channels comprising a plurality of plies of fiber fabrics; the skin-stiffener transition assembly (5) comprises a composite gusset filler (1), **characterized by** the composite gusset filler (1) being made of cut-off scrap material from at least one textile CFRP ply (2, 3) and of thermoplastic binder material; the composite gusset filler (1) being made of the same fibers than the fabrics in the C channels;
the composite gusset filler (1) being an endless extruded profile made of reinforced carbon fibers trimmed into fragments of 5 mm - 50 mm length and sorted into single yarn or roving elements to raw material, the sorted fragments of 5 mm - 50 mm being equipped with the thermoplastic binder material activated by heat, so that the composite gusset filler (1) is isotropic with the raw material having a random fiber orientation.

2. The skin-stiffener transition assembly (5) according to claim 1, **characterized in that** the fiber volume content in the composite gusset filler (1) is 45 % to 65 %.

3. A method of manufacture of said skin-stiffener transition assembly (5) according to any of claims 1 or 2 comprising the steps of:
(a) cutting scrap material from at least one textile CFRP ply (2, 3) of to obtain said cut-off material,
(b) trimming the cut-off material into fragments of 5 mm - 50 mm length,
(c) sorting the cut-off material into fabric elements to obtain said raw material formed by said single yarn or roving elements, and
(d) processing the raw material to a desired geometry for the skin-stiffener transition assembly (5) forming a semi-finished part.

4. An application of said skin-stiffener transition assembly (5) according to any of claim 1 or 2, **characterized in that** the semi-finished skin-stiffener transition (5) is applied to the aircraft structure of: helicopter airframes, helicopter structural parts, airplane doors, airplane frame.

## Patentansprüche

1. Außenhautversteifungsübergangsaufbau (5) einer Flugzeugzelle, wobei der Außenhautversteifungsübergangsaufbau (5) zwei miteinander verbundene Rinnen mit C-förmigem Querschnitt umfasst, um eine Rippe mit Flanschen zu bilden, wobei die Rinnen mit C-förmigem Querschnitt eine Mehrzahl von Gewebelagen aus Fasergeweben aufweisen, wobei der Außenhautversteifungsübergangsaufbau (5) einen Verbundstoffzwickelfüller (1) aufweist,
**dadurch gekennzeichnet, dass** der Verbundstoffzwickelfüller (1) aus Abfallmaterialschnitzeln von mindestens einem textilen kohlenstofffaserverstärkten Plastikgewebe (2, 3) (CFK) und aus einem thermoplastischen Klebstoffmaterial hergestellt ist, wobei der Verbundstoffzwickelfüller (1) aus den gleichen Fasern wie denen der Gewebe in den Rinnen mit C-förmigem Querschnitt hergestellt ist,
wobei der Verbundstoffzwickelfüller (1) ein endlos-stranggepresstes Profil ist, hergestellt aus verstärkten Kohlenstofffasern, die in Bruchstücke von 5 mm bis 50 mm Länge geschnitten und sortiert sind in einzelne Garn- oder Roving-Elemente als Rohmaterial, wobei die sortierten Bruchstücke von 5 mm bis 50 mm Länge mit dem durch Wärme aktivierten thermoplastischen Klebstoffmaterial versehen sind, derart, dass der Verbundstoffzwickelfüller (1) isotrop ist, wobei das Rohmaterial eine Zufallsfaserausrichtung aufweist.

2. Außenhautversteifungsübergangsaufbau (5) nach Anspruch 1,
**dadurch gekennzeichnet, dass** der Faservolumenanteil in dem Verbundstoffzwickelfüller (1) 45% bis 65% beträgt.

3. Verfahren zur Herstellung des Außenhautversteifungsübergangsaufbaus (5) nach einem der Ansprüche 1 oder 2, mit den Schritten:
(a) Schneiden von Abfallmaterial aus mindestens einem textilen kohlenstofffaserverstärkten Plastikgewebe (2, 3) (CFK), um Materialschnitzel zu erhalten,
(b) Schneiden der Materialschnitzel in Bruchstücke von 5 mm bis 50 mm Länge,
(c) Sortieren der Materialschnitzel in Gewebeelemente, um das Rohmaterial zu erhalten, welches aus einzelnen Garn- oder Roving-Elementen besteht, und
(d) Verarbeiten des Rohmaterials zu einer gewünschten Geometrie für den Außenhautversteifungsübergangsaufbau (5), der ein Halbzeugteil bildet.

4. Anwendung des Außenhautversteifungsübergangsaufbaus (5) nach einem der Ansprüche 1 oder 2,
**dadurch gekennzeichnet, dass** der halbfertige Außenhautversteifungsübergangsaufbau (5) verwendet wird bei der Luftfahrzeugzelle von: Hubschrauberzellen, Hubschrauberstrukturteilen, Flugzeugtüren, Flugzeugzellen.

## Revendications

1. Un ensemble de transition enveloppe-raidisseur (5) pour une structure d'aéronef ; l'ensemble de transition enveloppe-raidisseur (5) incluant deux gouttières en C liées ensemble pour former une arête avec des épaulements, les gouttières en C comprenant une pluralité de plis de tissus de fibres ; l'ensemble de transition enveloppe-raidisseur (5) comprend un matériau composite de remplissage de gousset (1),
**caractérisé en ce que** le matériau composite de remplissage de gousset (1) est constitué de chutes découpées d'au moins un pli de textile (CFRP) synthétique armé de fibre de carbone (2, 3) et de liant thermoplastique ; le matériau composite de remplissage de gousset (1) étant constitué des mêmes fibres que les tissus dans les gouttières en C ;
le remplissage de gousset (1) composite étant un profilé extrudé sans fin formé de fibres de carbone renforcées découpées en fragments de 5 mm - 50 mm de long et triées en éléments à fil simple ou éléments flottants pour obtenir un matériau brut, les fragments triés de 5 mm - 50 mm étant pourvus du liant thermoplastique activé thermiquement, de manière à ce que le remplissage de gousset (1) composite soit isotrope avec le matériau brut présentant une orientation de fibres aléatoire.

2. L'ensemble de transition enveloppe-raidisseur (5) selon la revendication 1, **caractérisé en ce que** la teneur en volume de fibre dans le remplissage de gousset (1) composite est de 45 % à 65 %.

3. Une méthode de fabrication dudit ensemble de transition enveloppe-raidisseur (5) selon l'une quelconque des revendications 1 ou 2 comprenant les étapes de :
(a) découpage d'une chute dans au moins un pli de textile synthétique armé de fibre de carbone (2, 3) pour obtenir ledit matériau découpé,
(b) découpage de la chute en fragments de 5 mm - 50 mm de long,
(c) tri de la chute découpée en éléments de tissu pour obtenir ledit matériau brut constitué desdits éléments à fil simple ou éléments flottants, et
(d) transformation du matériau brut selon une géométrie désirée pour l'ensemble de transition enveloppe-raidisseur (5) constituant une pièce semi-finie.

4. Une application dudit ensemble de transition enveloppe-raidisseur (5) selon l'une quelconque des revendications 1 ou 2.
**caractérisée en ce que** la transition enveloppe-raidisseur (5) semi-finie est appliquée à la structure d'aéronef de : cellules d'hélicoptères, pièces structurelles d'hélicoptères, portes d'avions, structures d'avions.
